**Europäisches Patentamt**

**European Patent Office**

**Office européen des brevets**

(19)

(11) Veröffentlichungsnummer: **0 247 528**
**B1**

(12) **EUROPÄISCHE PATENTSCHRIFT**

(45) Veröffentlichungstag der Patentschrift:
21.02.90

(51) Int. Cl.⁴: **C04B 35/58**

(21) Anmeldenummer: **87107429.0**

(22) Anmeldetag: **22.05.87**

(54) **Polykristalline Sinterkörper auf Basis von Siliciumnitrid mit hoher Bruchzähigkeit und Härte.**

(30) Priorität: **23.05.86 DE 3617282**

(43) Veröffentlichungstag der Anmeldung:
**02.12.87 Patentblatt 87/49**

(45) Bekanntmachung des Hinweises auf die Patenterteilung:
**21.02.90 Patentblatt 90/8**

(84) Benannte Vertragsstaaten:
**AT BE CH DE FR GB IT LI NL SE**

(56) Entgegenhaltungen:
**EP-A- 0 123 292**
**US-A- 4 365 022**

(73) Patentinhaber: **Elektroschmelzwerk Kempten GmbH, Herzog-Wilhelm-Strasse 16, D-8000 München 2(DE)**

(72) Erfinder: **Steinmann, Detlef, Dr. Dipl.-Ing., Schorenstrasse 18, D-8961 Buchenberg(DE)**
Erfinder: **Lipp, Alfred, Dr. Dipl.-Chem., Bürgermeister-Singer-Strasse 15, D-8939 Bad Wörishofen(DE)**
Erfinder: **Thaler, Hubert, Dipl.-Ing. (FH), Duracher Strasse 38, D-8960 Kempten(DE)**
Erfinder: **Lange, Dietrich, Dr. Dipl.-Ing., Beuthener Weg 7, D-8960 Kempten(DE)**

**Beschreibung**

Auf dem Gebiet der keramischen Schneidwerkstoffe haben polykristalline Sinterkörper auf Basis von Siliciumnitrid in den letzten Jahren zunehmende Bedeutung erlangt. Hierunter sind solche aus Siliciumnitrid und Sinteradditiven, aus Gemischen von Siliciumnitrid und anderen refraktären Verbindungen auf Oxid-, Carbid- und/oder Nitridbasis und aus den sogenannten Sialonen zu verstehen, in welchen Si- und N-Atome im $Si_3N_4$ teilweise durch Al- und O-Atome ersetzt sind unter Bildung von festen Lösungen aus Si- Al- O- N von unterschiedlicher Zusammensetzung.

Sinterkörper, die durch Sinterung ohne Druckanwendung von Pulvergemischen aus $Si_3N_4$ und Sinteradditiven auf Oxidbasis hergestellt worden sind, wie MgO, $Al_2O_3$ oder $Y_2O_3$ in Form vorgesinterter Mischoxide vom Spinell-Typ sind als Schneidwerkstoffe für übereutektische Al-Si-Legierungen bekannt (vgl. JP-Kokai 74, 133,803 ref. in Chem. Abstr. Vol. 84 (1976), No. 21 440 t).

Derartige Sinterkörper haben jedoch keine ausreichende Hochtemperaturfestigkeit, weil die vorhandenen sekundären Phasen auf Oxidbasis in den Korngrenzen vorwiegend glasartig sind, die bei hohen Temperaturen weich werden. Aus diesem Grunde sind sie als Schneidwerkstoffe unter verschärften Einsatzbedingungen, beispielsweise für die Bearbeitung von Eisenwerkstoffen, nicht geeignet.

Sinterkörper die durch Heißpressen unter Einhaltung ganz bestimmter Druck- und Temperaturbedingungen von Pulvergemischen aus $Si_3N_4$ und Oxiden, wie MgO, $ZrO_2$ und $Y_2O_3$, hergestellt worden sind, sollen indessen diesen Anforderungen für Schneidwerkstoffe besser genügen können unter der Voraussetzung, daß die Mengen der zugesetzten Oxide so ausgewählt werden, daß diese in den Korngrenzen der $Si_3N_4$-Matrix in nicht-Spinell-Form vorliegen, sondern geringe Mengen eines stabilen, refraktären Oxinitrids und/oder Silikats bilden (vgl. EP-A-98 59 und US-A-4 227 842). Die Ausbildung sekundärer kristalliner Korngrenzenphasen, die im wesentlichen aus Yttriumsiliciumoxinitriden bestehen, soll außerdem durch Zusatz anderer Stoffe in geringen Mengen, wie $Al_2O_3$, WC oder TiC unterstützt (vgl. US-A-4 401 617) oder durch eine zusätzliche Wärmebehandlung der Sinterkörper erreicht werden können (vgl. DE-A-30 47 255, die der US-A-4 264 548 entspricht). Erfolgt die Herstellung der Sinterkörper ohne Druckanwendung ist in der Ausgangspulvermischung aus $Si_3N_4$ und Oxidzusätzen die Anwesenheit einer dritten Substanz, wie $Al_2O_3$, WC, $WSi_2$, W und TiC unbedingt erforderlich (vgl. DE-A-30 39 827, die der US-A-4 280 973 entspricht).

Schneidwerkstoffe, die aus Pulvergemischen von $Si_3N_4$, Sinterhilfsmitteln auf Oxidbasis und refraktären Zusätzen in Mengen bis zu etwa 40 Gew.-% auf Carbid- (z.B. TiC) oder Nitridbasis oder Gemischen hiervon durch Sinterung mit oder ohne Druckanwendung hergestellt worden sind, sind ebenfalls bereits bekannt (vgl. US-A-4 388 085).

Für die Herstellung von Hochleistungsschneidplättchen sind auch die sogenannten Sialone bekannt geworden,die aus Pulvergemischen von $Si_3N_4$, AlN und $Al_2O_3$, zusammen mit einem Sinterhilfsmittel auf Oxidbasis, wie $Y_2O_3$ mit oder ohne Druckanwendung hergestellt werden können. Diese Werkstoffe zeichnen sich durch eine verbesserte Hochtemperaturfestigkeit aus, worunter zu verstehen ist, daß der Bruchmodul bei 1200°C gegenüber dem bei Raumtemperatur gemessenen Wert nur wenig abfällt, wenn nach beendetem Sintervorgang durch eine kontrollierte stufenweise Abkühlung oder durch eine anschließende Wärmebehandlung dafür gesorgt wird, daß mindestens ein Teil des Glases in den intergranularen glasartigen Korngrenzenphasen als Keramikphase kristallisiert, die beispielsweise einen Y-Al-Granat enthält (vgl. DE-C-27 33 354, die der US-A-4 127 416 entspricht).

Es wurde jedoch festgestellt, daß die Schneidwerkstoffe auf Basis von $Si_3N_4$ gemäß dem Stand der Technik den Anforderungen bezüglich der Eigenschaften, die den idealen Schneidwerkstoff charakterisieren, nur teilweise genügen. Sie sind zwar im allgemeinen dicht, biegefest, oxidations- und thermoschockbeständig, aber grundsätzlich nicht zäh genug, um insbesondere schlagartigen Belastungen über längere Zeit ohne Bruch, vor allem ohne Kantenbruch zu widerstehen, die beispielsweise bei der Verwendung als Schneidplättchen im unterbrochenen Schnitt auftreten.

Es stellt sich somit die Aufgabe, polykristalline Sinterkörper auf Basis von Siliciumnitrid, Sinteradditiven auf Oxidbasis und gegebenenfalls weiteren refraktären Zusätzen auf Carbid- und/oder Nitridbasis zur Verfügung zu stellen, die sich durch die Eigenschaftskombination hohe Härte mit hoher Bruchzähigkeit auszeichnen und besonders verschleißfest sind, um den Anforderungen an keramische Schneidwerkstoffe für die spanabhebende Bearbeitung von Eisenwerkstoffen bei hohen Schnittgeschwindigkeiten besser genügen zu können.

Diese Aufgabe wird erfindungsgemäß für polykristalline Sinterkörper, die aus mindestens 66 Gew.-% einer kristallinen $Si_3N_4$-Phase, von der mindestens 90 Gew.-% in der β-Modifikation vorliegen und aus bis zu 34 Gew.-% sekundären, intergranularen Korngrenzenphasen auf Oxid-, Carbid- und/oder Nitridbasis bestehen, von welchen mindestens eine kristallin ist, dadurch gelöst, daß mindestens 25 Gew.-% der intergranularen sekundären Korngrenzenphasen aus einer quasiternären, kristallinen Verbindung aus $Ga_2O_3$, $La_2O_3$ und $A_2O_3$ bestehen, deren mengenmäßige Anteile in Mol-% im Dreistoffsystem $Ga_2O_3$-$La_2O_3$-$Al_2O_3$ durch die Dreiecksfläche mit den Eckpunkten

$E_1 = 5\%\ Ga_2O_3 - 5\%\ La_2O_3 - 90\%\ Al_2O_3$
$E_2 = 90\%\ Ga_2O_3 - 5\%\ La_2O_3\ 5\%\ Al_2O_3$
$E_3 = 5\%\ Ga_2O_3 - 90\%\ La_2O_3\ 5\%\ Al_2O_3$

festgelegt sind, und die quasiternäre, kristalline Verbindung (im folgenden als "Gala"-Verbindung abgekürzt) vor der Herstellung der polykristallinen Sinterkörper aus Galliumoxid, Lanthanoxid und Aluminiumoxid hergestellt worden ist.

Die erfindungsgemäßen polykristallinen Sinterkörper können in an sich bekannter Weise durch Sinterung von Pulvergemischen aus $Si_3N_4$, Sinteradditiven auf Oxidbasis und gegebenenfalls weiteren refraktaren Zusätzen auf Carbid- und/oder Nitridbasis mit oder ohne Anwendung von Druck bei Temperaturen im Be reich von 1700°C bis 2100°C hergestellt werden mit der entscheidenden Maßgabe, daß eine quasiternäre, kristalline Verbindung aus $Ga_2O_3$, $La_2O_3$ und $Al_2O_3$, deren mengenmäßige Anteile in Mol-% definitionsgemäß im Dreistoffsystem $Ga_2O_3$-$La_2O_3$-$Al_2O_3$ durch die Dreiecksfläche mit den Eckpunkten $E_1$, $E_2$, $E_3$ und vorzugsweise durch die Dreiecksfläche mit den Eckpunkten

$E_{13}$ = 5% $Ga_2O_3$ - 50% $La_2O_3$ - 45% $Al_2O_3$
$E_{15}$ = 45% $Ga_2O_3$ - 50% $La_2O_3$ - 5% $Al_2O_3$
$E_{21}$ = 40% $Ga_2O_3$ - 20% $La_2O_3$ - 40% $Al_2O_3$

festgelegt sind
als mindestens ein Sinteradditiv verwendet wird, das vor dem Vermischen mit den übrigen Bestandteilen und vor der Sinterung aus Galliumoxid, Lanthanoxid und Aluminiumoxid in den oben definierten Mengen durch Erhitzen auf Temperaturen von 1500°C bis 1850°C hergestellt worden ist.

Als Ausgangsmaterial werden dabei vorteilhaft homogene Pulvergemische mit einer durchschnittlichen Teilchengröße von < 2μm verwendet, aus mindestens 70 Gew.-% Siliciumnitrid, von dem mindestens 80 Gew.-% in der alpha-Modifikation vorliegen, mit einem Anteil von Verunreinigungen in Form von Oxiden und freiem Kohlenstoff von nicht mehr als 4,0 Gew.-% und aus bis zu 30 Gew.-% des Pulvers ener "Gala"-Verbindung allein oder im Gemisch mt bekannten Zusätzen auf Oxid- und/oder Carbid- oder Nitridbasis, wobei jedoch insgesamt mindestens 1 Gew.-% des Pulvers einer "Gala"-Verbindung vorhanden sein muß.

Als Siliciumnitridpulver können handelsübliche Pulver von üblicher Feinheit und Reinheit eingesetzt werden, das heißt, es sind weder besonders feine, noch besonders reine Pulverqualitäten erforderlich, mit maximalen Teilchengrößen von bis zu etwa 15 μm, das heißt, mit einer spezifischen Oberfläche im Bereich von etwa 3 bis 20 m²/g (gemessen nach BET). Richtwerte für die Verunreinigungen in den $Si_3N_4$-Pulvern, die toleriert werden können, sind:

$$CaO \leq 0,4 \ \text{Gew.-\%}$$

$$MgO \leq 0,2 \ \text{Gew.-\%}$$

$$Na_2O \leq 0,1 \ \text{Gew.-\%}$$

$$K_2O \leq 0,1 \ \text{Gew.-\%}$$

$$Li_2O \leq 0,1 \ \text{Gew.-\%}$$

$$Al_2O_3 \leq 1,1 \ \text{Gew.-\%}$$

$$Fe_2O_3 \leq 1,5 \ \text{Gew.-\%}$$

$$TiO_2 \leq 0,1 \ \text{Gew.-\%} \quad \text{und}$$

$$C_{frei} \leq 0,4 \ \text{Gew.-\%}$$

Bei Einsatz von Gemischen aus dem Pulver einer "Gala"-Verbindung und Zusätzen auf Oxidbasis werden vorteilhaft solche aus den Gruppen der kristallinen Silicate natürlicher oder synthetischer Herkunft, der Metalloxide mit Metallatomen aus den Gruppen 2a und 3b des Periodischen Systems einschließlich der Lanthaniden und Aluminium und der Silicium-Aluminium-oxinitride verwendet.

Beispiele für kristalline Silicate sind solche mit Schmelzpunkten im Bereich von 1350°C bis 1950°C aus der Gruppe der Neso-, Soro-, Cyclo-, Ino-, Phyllo- und Tektosilicate mit Ausnahme von Quarz, die gemäß der DE-A 3 423 573 als Sinteradditive zusammen mit Metallcarbiden für die Herstellung von polykristallinen Sinterkörpern auf Basis von Siliciumnitrid vorgeschlagen worden sind.

Spezielle Beispiele sind Ca-Mg-silicate natürlicher Herkunft, wie $Ca_2Mg(Si_2O_7)$ (Akermanit) und Y-N-silicate synthetischer Herkunft, wie $YAlN(SiO_5)$, hergestellt aus $AlN \times SiO_2 \times Y_2O_3$.

Beispiele für Metalloxide sind MgO, $Y_2O_3$, Oxide der Lanthaniden und $Al_2O_3$ einschließlich der Mischoxide aus $Y_2O_3$ und $Al_2O_3$, wie $Y_4Al_2O_9$ und $Y_6Al_{10}O_{24}$.

Beispiele für Silicium Aluminium-oxinitride sind solche der Zusammensetzung:
$SiAl_4O_2N_4$, $SiAl_5O_2N_5$, $SiAl_6O_2N_6$, $SiAl_8O_2N_8$ und $Si_{0.5}Al_{3.5}O_{2.5}N_{2.5}$, .

Bei Einsatz von Gemischen aus dem Pulver einer "Gala"-Verbindung und refraktären Zusätzen auf Carbid- und/oder Nitridbasis werden vorteilhaft solche aus der Gruppe der Metallcarbide mit Metallatomen aus den Gruppen 4b, 5b und 6b des Periodischen Systems, sowie B und Si und aus der Gruppe Titannitrid und Titancarbonitrid verwendet.

Beispiele für Metallcarbide sind TiC, ZrC, WC, TaC, CrC, VC sowie $B_4C$ und SiC.

Die Mengen des kristallinen Pulvers einer "Gala"-Verbindung müssen bei Einsatz der oben genannten Gemische, unabhängig davon, ob hierin Zusätze auf Oxid- oder Carbid- /Nitridbasis verwendet werden, jeweils so bemessen werden, daß im fertigen Sinterkörper definitionsgemäß mindestens 25 Gew.-% aller vorhandenen sekundären Phasen aus einer kristallinen "Gala"-Verbindung bestehen, wobei auch die im $Si_3N_4$-Pulver vorhandenen Verunreinigungen zu berücksichtigen sind.

Vorzugsweise beträgt der Anteil der kristallinen "Gala" - Verbindung im Gemisch mit Zusätzen auf Carbid/Nitridbasis mindestens 30 Gew.-% bis etwa 70 Gew.-% und im Gemisch mit Zusätzen auf Oxidbasis mindestens 30 Gew.-% bis etwa 60 Gew.-%.

Für die Herstellung der erfindungsgemäßen polykristallinen Sinterkörper werden die $Si_3N_4$-Pulver mit den ausgewählten Zusätzen gemeinsam mit Hilfe üblicher bekannter Maßnahmen homogen vermischt. Das homogene Vermischen wird vorteilhaft durch Vermahlen in Gegenwart eines organischen Lösungsmittels durchgeführt, wie Methanol, Toluol oder Cyclohexan. Anstelle der fertigen Ausgangspulver können die Zusätze jedoch auch mit dem Si-Pulver homogen vermahlen und anschließend gemeinsam nitridiert werden. Hierdurch wird eine besonders gleichmäßige Verteilung der Zusätze im $Si_3N_4$ erreicht. Nach beendeter Nitridierung ist das Einschalten einer zusätzlichen Mahlstufe zweckmäßig, um die erforderliche durchschnittliche Teilchengröße von < 2 µm im Ausgangspulvergemisch sicherzustellen.

Anschließend werden diese homogenen Ausgangspulvergemische nach den üblichen bekannten Verfahren mit oder ohne Druckanwendung gesintert. Die Verfahrensparameter, wie Temperatur, Haltezeit und gegebenenfalls Druck werden dabei vorteilhaft so gewählt, daß sie nicht nur für eine hohe Verdichtung des zu sinternden Körpers ausreichend sind, sondern gleichzeitig auch für die praktisch vollständige Umwandlung der alpha-Modifikation des $Si_3N_4$ in die β-Modifikation. Für die einzelnen Sinterverfahren haben sich dabei folgende Verfahrensparameter besonders bewährt:

1. Sintern ohne Druckanwendung in einem Pulverbett aus $Si_3N_4$ oder $S_3N_4$ und BN;
Temperatur maximal 1850°C; Haltezeit in Abhängigkeit von der Wandstärke des zu sinternden Körpers von 10 bis 40 mm: 1 bis 6 Stunden;

2. Sintern unter stationärem Stickstoffdruck von mindestens 2 MPa,
Temperatur maximal 2100°C, Haltezeit bei Wandstärken von 10 bis 40 mm: 1 bis 3 Stunden;

3. Heißpressen unter Stempeldruck in Gegenwart von Stickstoff unter Normaldruck oder unter Vakuum;
Temperatur maximal 1800°C, Haltezeit bei einer Wandstärke von 10 bis 40 mm: 1 bis 1,5 Stunden;

4. Heißisostatischpressen unter Stickstoffdruck bis 200 MPa; Temperatur maximal 1850°C; Haltezeit bei einer Wandstärke von 10 bis 40 mm: 1 bis 1,5 Stunden.

Die erfindungsgemäß unter Verwendung einer kristallinen "Gala"-Verbindung hergestellten polykristallinen Sinterkörper haben unabhängig von dem im einzelnen angewendeten Sinterverfahren eine Dichte von mehr als 96 % der theoretisch möglichen Dichte, die unter Anwendung der Drucksinterverfahren bis zu 100 % erreichen kann. Sie sind durch die Kombination folgender Eigenschaften charakterisiert:

1. Relativ niedriger Elastizitätsmodul (E-modul) im Bereich von 250 - 310 KN/mm² gemessen bei Raumtemperatur, der als Maß für eine sehr gute Thermoschockbeständigkeit gil;

2. hohe mechanische Festigkeit bei Raumtemperatur und geringer Festigkeitsabfall mit der Temperatur, nachgewiesen durch eine Biegefestigkeit bei der Raumtemperatur von mindestens 600 N/mm², gemessen nach der 4-Punkt-Methode, die bis 1100°C um weniger als 30 %, vorzugsweise um weniger als 25 %, abfällt;

3. hohe Härte bei Raumtemperatur und geringer Härteabfall mit der Temperatur, nachgewiesen durch $HK_2$-Werte von 1600 bis 2000 bei Raumtemperatur, gemessen nach Knoop bei einer Belastung von 19,62 N, die bis 1100°C um weniger als 45 %, vorzugsweise um weniger als 40 % abfällt;

4. hohe Bruchzähigkeit, nachgewiesen durch $K_{IC}$ -Werte von mindestens 7,0 MN/³m/² , gemessen nach der 4-Punkt-Methode bei 50 % Kerbtiefe und einer Belastungsgeschwindigkeit von 500 N/min.

Sie haben außerdem ein Mikrogefüge, das aus nadelförmigen $Si_3N_4$-Kristallen mit einem Korndurchmesser von maximal 5 µm und einem Verhältnis von Kornlänge zu Korndurchmesser von 4:1 bis 7:1 und aus homogen verteilten sekundären Phasen besteht die in der polierten Oberfläche in Flächen von weniger als 10 µm² sichtbar sind. Die Anwesenheit einer kristallinen "Gala"-Verbindung in diesen sekundären Phasen ist röntgenographisch nachweisbar.

Die erfindungsgemäß unter Verwendung einer kristallinen "Gala"-Verbindung hergestellten polykristallinen Siliciumnitridsinterkörper sind aufgrund dieser Kombination von Eigenschaften als keramische Schneidwerkstoffe für die spanabhebende Bearbeitung von Eisenwerkstoffen bei hohen Schnittgeschwindigkeiten solchen gemäß dem Stand der Technik eindeutig überlegen. In den folgenden Beispielen wurden Sinterkörper, die unter Verwendung des erfindungsgemäßen Zusatzes einer kristallinen "Gala"-Verbindung und solche ohne diesen Zusatz bei Zerspanungsversuchen unter verschiedenen Bedingungen geprüft und die Überlegenheit der erfindungsgemäßen Schneidwerkstoffe nachgewiesen.

<u>Beispiele</u>

A) Herstellung der quasiternären kristallinen Verbindungen im System $Ga_2O_3$-$La_2O_3$-$Al_2O_3$

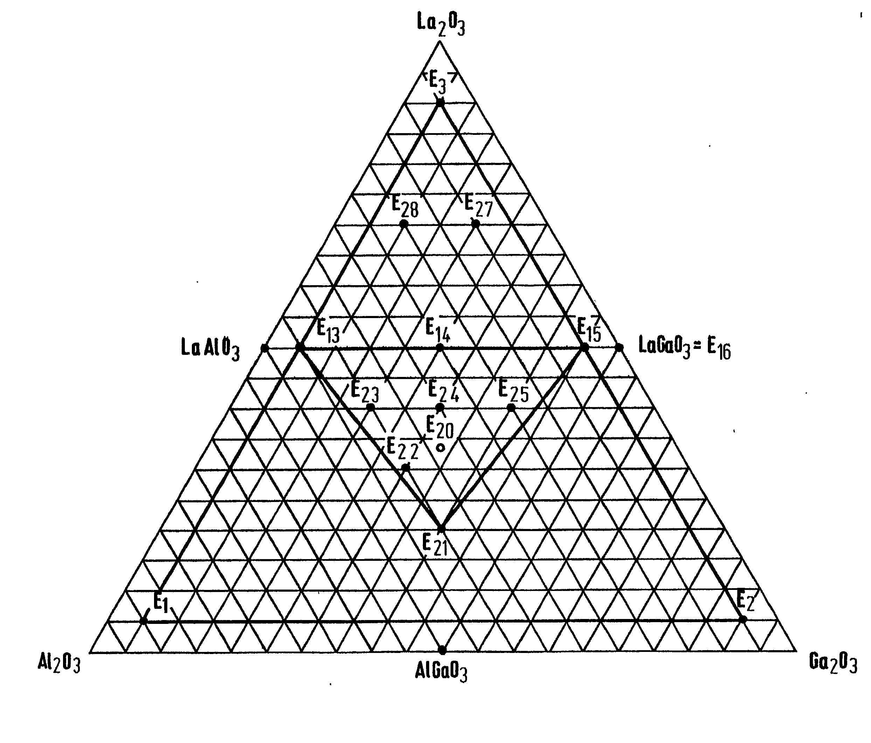

$Ga_2O_3$, $La_2O_3$ und $Al_2O_3$ wurden entsprechend der im Dreistoffsystem gekennzeichneten Zusammensetzungen, d.h. im gekennzeichneten Dreieck $E_1$-$E_2$-$E_3$ vorzugsweise im gekennzeichneten Dreieck $E_{13}$-$E_{15}$-$E_{21}$ in Mol-% (siehe Fig. 1) mit Aceton vermischt. Nach dem Trocknen und Sieben (Siebmaschenweite 100 µm) wurde das wasserfreie, homogene Pulvergemisch in einem geeigneten Tiegel unter oxidierenden Bedingungen, ggf. auch unter Schutzgas, im Bereich 1500°C - 1850°C erhitzt und 15 - 30 Minuten bei dieser Temperatur gehalten. Durch die Wärmebehandlung entsteht ein röntgenographisch nachweisbar weitgehend einphasiger Stoff. Nach dem Abkühlen wurden die so hergestellten quasiternären kristallinen Verbindungen in einer Planetenkugelmühle mit Mahlbehälter und Mahlkugeln aus Siliciumnitrid unter Verwendung von Cyclohexan als Mahlflüssigkeit bis zur Erzielung der erforderlichen durchschnittlichen Teilchengröße von < 2 µm vermahlen.

B) <u>Herstellung der erfindungsgemäßen polykristallinen Sinterkörper:</u>

<u>Beispiel 1:</u>

$Si_3N_4$-Ausgangspulver mit folgender Analyse wurde verwendet:

| | | |
|---|---|---|
| $\alpha$ - $Si_3N_4$ | 87 | Gew.-% |
| $\beta$ - $Si_3N_4$ | 2,5 | Gew.-% |
| $O_2$ | 1,63 | Gew.-% |
| C | 0,21 | Gew.-% |
| Al | 0,15 | Gew.-% |
| Fe | 0,21 | Gew.-% |
| Ca | 0,14 | Gew.-% |
| Mg | $\leq$ 0,05 | Gew.-% |
| Zr | $\leq$ 0,05 | Gew.-% |
| Ti | 0,02 | Gew.-% |
| Na | $\leq$ 0,02 | Gew.-% |
| K | $\leq$ 0,02 | Gew.-% |
| $N_2$ | 36,05 | Gew.-% |
| spez. Oberfläche (BET) | 3,7 | $m^2/g$ |

Das $Si_3N_4$-Pulver wurde mit den nach A hergestelltenkristallinen "Gala"-Verbindungen und gegebenenfalls weiteren Zusätzen auf Carbidbasis in den angegebenen Mengen in einer Planetenkugelmühle mit Mahlbehälter und Mahlkugeln aus Siliciumnitrid unter Verwendung von Cyclohexan als Mahlflüssigkeit 1 bis 5 Stunden homogen vermischt. Anschließend wurde das Cyclohexan durch Verdampfen entfernt und das Pulvergemisch durch Sieben (Siebmaschenweite 100 μm) von größeren agglomerierten Teilchen befreit. Dann wurde das Pulvergemisch nach üblichen bekannten Formgebungsverfahren (kaltisostatisch Pressen, Gesenkpressen, oder Gießen) geformt und in bekannter Weise gesintert.

In Tabelle 1 sind die Mengen des Siliciumnitridausgangspulvers und der Zusätze in Gewichtsprozent, die Mahldauer in Stunden, das angewendete Sinterverfahren und die erreichten Sinterdichten in g/cc zusammengestellt. Die Zusammensetzungen der "Gala"-Verbindungen in Mol-% entsprechen den in Fig. 1 dargestellten Punkten E

## Tabelle 1

| Probe Nr. | % $Si_3N_4$ | % "Gala"-Verbindun-gen | % Carbide | Mahldauer Std. | Sinterver-fahren | Dichte in g/cc |
|---|---|---|---|---|---|---|
| 1 | 90 | 10 $E_{13}$ | — | 1 | HP | 3,25 – 3,28 |
| 2 | 92 | 8 $E_{14}$ | — | 1 | $N_2$-Druck | 3,24 – 3,27 |
| 3 | 95 | 5 $E_{15}$ | — | 2 | DLS | 3,22 – 3,24 |
| 4 | 80 | 10 $E_{23}$ | 10 $Cr_3C_2$ | 5 | HP | 3,38 |
| 5 | 80 | 10 $E_{24}$ | 10 ZrC | 5 | HP | 3,40 – 3,42 |
| 6 | 80 | 10 $E_{25}$ | 10 VC | 1 | HP | 3,37 – 3,39 |
| 7 | 80 | 10 $E_{22}$ | 10 TaC | 5 | $N_2$-Druck | 3,49 – 3,52 |
| 8 | 80 | 10 $E_{20}$ | 10 TiC | 5 | DLS | 3,38 – 3,40 |
| 9 | 70 | 10 $E_{21}$ | 20 TiC | 5 | DLS | 3,44 – 3,46 |

Hierin bedeuten:  HP = heißgepresst unter Stempeldruck, spez. Preßdruck: 35 MPa Temperatur: 1800°C; Haltezeit: 1 Std.

$N_2$-Druck = gesintert unter stationärem $N_2$- Druck von 6 MPa; Temperatur: 1900°C; Haltezeit: 3 Std.

DLS = drucklos gesintert in einem Pulver- bett aus $BN/Si_3N_4$-Gemisch Temperatur: 1800°C; Haltezeit: 6 Std.

## Beispiel 2:

Aus dem in Beispiel 1 verwendeten Siliciumnitridausgangspulver, dem nach A hergestellten "Gala"-Verbindungen und gegebenenfalls weiteren Zusätzen auf Oxid-, Carbid- und/oder Nitridbasis wurden Sinterkörper hergestellt und hinsichtlich ihrer Eigenschaften untersucht.

Zum Vergleich wurden Sinterkörper herangezogen, die unter jeweils gleichen Bedingungen, jedoch ohne den erfindungsgemässen Zusatz der "Gala"-Verbindungen hergestellt wurden.

In Tabelle 2 sind die Mengen des $Si_3N_4$-Ausgangspulvers und der Zusätze in Gewichtsprozent für die Herstellung der Sinterkörper und die Eigenschaften der Sinterkörper zusammengestellt.

Tabelle 2

| Probe Nr. | $Si_3N_4$ % | "Gala"-Verbindungen % | Carbide/ Nitride % | Oxide % | E-modul KN/mm$^2$ | BF$_{RT}$ N/mm$^2$ | BF$_{1100}$ N/mm$^2$ | HK2$_{RT}$ | HK2$_{1100}$ | $K_{IC}$ MN/m$^3$ $^2$ |
|---|---|---|---|---|---|---|---|---|---|---|
| E 1 | 90 | 10 E$_{20}$ | -- | -- | 305 | 767 | 589 | 1780 | 1301 | 8.1 |
| V 1 | 90 | -- | -- | 3,05 Ga$_2$O$_3$ 5,30 La$_2$O$_3$ 1,65 Al$_2$O$_3$ | 319 | 627 | 289 | 1382 | 768 | 5.8 |
| E 2 | 90 | 5 E$_{13}$ | | 2 Al$_2$O$_3$ + 3 Y$_2$O$_3$ | 310 | 751 | 561 | 1690 | 1165 | 7.4 |
| V 2 | 90 | -- | -- | 2 Al$_2$O$_3$ + 8 Y$_2$O$_3$ | 320 | 657 | 346 | 1538 | 726 | 6.0 |
| E3 | 89 | 5 E$_{14}$ | -- | 6 Y$_2$O$_3$ | 304 | 802 | 590 | 1690 | 990 | 8.0 |
| V 3 | 89 | -- | -- | 11 Y$_2$O$_3$ | 319 | 819 | 600 | 1684 | 898 | 6.7 |
| E 4 | 88 | 5E$_{15}$ | 2 TIN | 5 Y$_2$O$_3$ | 303 | 762 | 576 | 1800 | 1190 | 7.7 |
| V 4 | 88 | -- | 2 TiN | 10 Y$_2$O$_3$ | 323 | 704 | 498 | 1710 | 888 | 6.1 |
| E 5 | 82 | 10 E$_{14}$ | 3 WC | 5 Ca$_2$Mg(Si$_2$O$_7$) | 265 | 761 | 584 | 1675 | 1200 | 7.3 |
| V 5 | 92 | -- | 3 WC | 5 Ca$_2$Mg(Si$_2$O$_7$) | 278 | 690 | 495 | 1538 | 888 | 7.1 |
| E 6 | 78 | 10 E$_{23}$ | -- | 5 SiAl$_4$O$_2$N$_4$ + 7 Y$_6$Al$_{10}$O$_{24}$ | 294 | 728 | 602 | 1596 | 995 | 7.2 |
| V 6 | 88 | -- | -- | 5 SiAl$_4$O$_2$N$_4$ + 7 Y$_6$Al$_{10}$O$_{24}$ | 317 | 621 | 404 | 1562 | 831,2 | 6.0 |
| E 7 | 77.5 | 10 E$_{21}$ | 0.5 VC | 12 YAlN(SiO$_5$) | 277 | 704 | 676 | 1802 | 1265 | 7.6 |
| V 7 | 87.5 | -- | 0.5 VC | 12 YAlN(SiO$_5$) | 293 | 914 | 602 | 1610 | 940 | 7.1 |
| E 8 | 75 | 10 E$_{25}$ | 5 TaC | 5 SiAl$_8$O$_2$N$_8$ + 5 Y$_6$Al$_{10}$O$_{24}$ | 308 | 700 | 561 | 1834 | 1194 | 7.8 |
| V 8 | 80 | -- | 5 TaC | 5 SiAl$_8$O$_2$N$_8$ + 10 Y$_6$Al$_{10}$O$_{24}$ | 322 | 589 | 381 | 1634 | 940 | 6.1 |
| E 9 | 70 | 10 E$_{24}$ | 10 TiC | 5 SiAl$_6$O$_2$N$_6$ + 5 Y$_6$Al$_{10}$O$_{24}$ | 307 | 698 | 597 | 1716 | 1220 | 7.5 |
| V 9 | 75 | -- | 10 TiC | 5 SiAl$_6$O$_2$N$_6$ + 10 Y$_6$Al$_{10}$O$_{24}$ | 325 | 611 | 403 | 1610 | 996 | 5.9 |
| E 10 | 85 | 10 E$_{20}$ | 5 SiC | -- | 299 | 719 | 593 | 1690 | 1020 | 7.2 |
| E 11 | 85 | 10 E$_{13}$ | 5 B$_4$C | -- | 301 | 655 | 581 | 1634 | 1045 | 7.3 |
| E 12 | 85 | 10 E$_{13}$ | 5 CrC | -- | 303 | 722 | 604 | 1592 | 1112 | 7.8 |
| E 13 | 85 | 10 E$_{14}$ | 5 ZrC | -- | 303 | 713 | 596 | 1610 | 1140 | 7.4 |
| E 14 | 80 | 10 E$_{28}$ | 10 VC | -- | 305 | 610 | 539 | 1710 | 1216 | 7.7 |
| E 15 | 70 | 10 E$_{20}$ | 10 VC + 10 TIN | -- | 310 | 695 | 543 | 1820 | 1245 | 7.9 |

Hierin bedeuten:

E-modul = Elastizitätsmodul in KN/mm², gemessen bei Raumtemperatur;

$BF_{RT}$ = Biegefestigkeit in N/mm², gemessen nach der 4-Punkt-Methode bei Raumtemperatur;

$BF_{1100}$ = Biegefestigkeit in N/mm², gemessen nach der 4-Punkt-Methode bei 1100°C;

$HK2_{RT}$ = Härte gemessen nach Knoop bei einer Belastung von 19,62 N bei Raumtemperatur;

$HK2_{1100}$ = Härte gemessen nach Knoop bei einer Belastung von 19,62 N bei 1100°C.

Diese Härteprüfung ist eine Abwandlung der Härteprüfung nach Vickers (DIN 50133) bei der eine Diamantpyramide mit schlanker, rhombischer Grundfläche als fast schneidenförmiger Eindringkörper bei der angegebenen Belastung verwendet wurde.

$K_{IC}$ = Bruchzähigkeit in MN/m³/², gemessen nach der 4-Punkt-Methode an gekerbten Stäbchen der Abmessung 2 × 4 × 34 mm; die Kerbtiefe betrug 2 mm (= 50%) und die Kerbbreite 0,1 mm; die Belastungsgeschwindigkeit erfolgte mit 500 N/min.

C) Prüfung der Sinterkörper in Zerspanungsversuchen:

Die in Beispiel 2 hergestellten erfindungsgemäßen Sinterkörper E 1 bis E 15 und die zum Vergleich hergestellten Sinterkörper V 1 bis V 9 wurden in Zerspanungsversuchen wie folgt geprüft:

Versuch 1: Bremsscheibenbearbeitung

Bremsscheiben aus Grauguß GG26 wurden im kontinuierlichen Schnitt bearbeitet. Schnittgeschwindigkeit $V_c$ = 600m/min

Vorschub f = 0,6 mm/U

Schnittiefe ap = 4 mm

Eingriffszeit/Stück = 5,25 sec;

Schneidplättchengeometrie = SNGN120430 T

Unter der Standmenge ist die Anzahl der Bremsscheiben (Stück) zu verstehen, die mit einem Schneidplättchen bis zum Erreichen der Verschleißmarkenbreite $Vb_r$ = 0,3 mm pro Schneidkante bearbeitet wurden.

Versuch 2: Längsdrehen

Wellen aus Grauguß GGG50 wurden im unterbrochenen Schnitt längsgedreht. Schnittgeschwindigkeit $V_c$ = 600m/min

Vorschub f = 0,6 mm/U

Schnittiefe ap = 2 mm

Schneidplättchengeometrie = SNGN 120412 T

Unter der Standzeit ist die Zeit in Minuten bis zum Erreichen der Verschleißmarkenbreite $Vb_r$ von 0,3 mm einer Schneidkante des Schneidplättchens zu verstehen.

Versuch 3: Plandrehen

Hohlzylinder aus Grauguß GG25 mit einer Härte von 230 HB, einem Außendurchmesser von 110 mm, einem Innendurchmesser von 80 mm und einer Länge von 200 mm wurden im Standardversuch plangedreht. Schnittgeschwindigkeit $V_c$ 678 - 907m/min

Vorschub f = 0,4 mm/U

Schnittiefe ap = 2 mm;

Schneidplättchengeometrie = SNGN 120412 T

Unter Standzeit ist die Zeit in Minuten bis zum Erreichen der Verschleißmarkenbreite $Vb_r$ 0,3 mm einer Schneidkante des Schneidplättchens zu verstehen.

In Tabelle 3 sind die Ergebnisse dieser Versuche 1 bis 3 zusammengestellt.

## Tabelle 3

| Probe Nr. | Versuch 1 Standmenge in Stück | Versuch 2 Standzeit in Minuten | Versuch 3 Standzeit in Minuten |
|---|---|---|---|
| E 1 | 482 | 36 | 44 |
| V 1 | 178 | 13 | 12 |
| E 2 | 407 | 30 | 37 |
| V 2 | 207 | 3 | 9 |
| E 3 | 465 | 34 | 40 |
| V 3 | 192 | 9 | 10 |
| E 4 | 397 | 35 | 35 |
| V 4 | 180 | 11 | 11 |
| E 5 | 385 | 30 | 36 |
| V 5 | 281 | 14 | 11 |
| E 6 | 411 | 30 | 37 |
| V 6 | 104 | 2 | 7 |
| E 7 | 423 | 36 | 36 |
| V 7 | 256 | 11 | 8 |
| E 8 | 397 | 39 | 39 |
| V 8 | 199 | 7 | 8 |
| E 9 | 420 | 33 | 36 |
| V 9 | 164 | 1.5 | 4 |
| E 10 | 390 | 28 | 34 |
| E 11 | 399 | 28 | 34 |
| E 12 | 412 | 30 | 38 |
| E 13 | 421 | 32 | 49 |
| E 14 | 408 | 39 | 42 |
| E 15 | 400 | 39 | 41 |

Wie aus den Daten in Tabelle 3 ersichtlich wurden mit den erfindungsgemäßen Sinterkörpern E 1 bis E 15 in den drei verschiedenen Zerspanungsversuchen von Gußeisenwerkstoffen bei der hohen Schnittgeschwindigkeit von 600 m/min beträchtlich höhere Standmengen, bzw. Standzeiten erzielt als mit den Vergleichsproben V 1 bis V 9.

Für diese besseren Ergebnisse sind die kristallinen "Gala"-Verbindungen verantwortlich, die in den erfindungsgemäßen Sinterkörpern nachweisbar vorhanden ist. Diese kristallinen Phasen werden aber offensichtlich nur dann gebildet, wenn in der Ausgangspulvermischung bereits kristalline "Gala"-Verbindungen eingesetzt werden, die vor dem Vermischen aus $Ga_2O_3$, $La_2O_3$ und $Al_2O_3$ hergestellt worden sind. Das wird besonders deutlich aus dem Vergleich der Ergebnisse von Probe $E_1$ mit $V_1$, bei welcher $Ga_2O_3$, $La_2O_3$ und $Al_2O_3$ -Pulver, getrennt mit dem $Si_3N_4$-Ausgangspulver vor der Sinterung vermischt worden sind.

Aufgrund der ausgezeichneten Eigenschaften ist es offensichtlich, das die erfindungsgemäßen Werkstoffe nicht nur in der Zerspanungstechnik sondern allgemein als verschleißfeste Stoffe im Maschinenbau und der Verfahrenstechnik eingesetzt werden können. Beispiele hierfür sind
- Lagertechnik, Ventiltechnik, Pumpentechnik, Düsentechnik und Hochtemperaturtechnik.

**Patentansprüche**

1. Polykristalline Sinterkörper mit hoher Bruchzähigkeit und Härte bestehend aus mindestens 66 Gew.-% einer kristallinen Siliciumnitridphase, von der mindestens 90 Gew.-% in der β-Modifikation vorliegen und aus bis zu 34 Gew.-% sekundären, intergranularen Korngrenzenphasen auf Oxid-, Carbid- und/oder Nitridbasis, von welchen mindestens eine kristallin ist,
**dadurch gekennzeichnet,**
daß mindestens 25 Gew.-% der intergranularen, sekundären Korngrenzenphasen aus einer quasiternären kristallinen Verbindung aus $Ga_2O_3$-$La_2O_3$-$Al_2O_3$ bestehen, deren mengenmäßige Anteile in Mol-% im Dreistoffsystem $Ga_2O_3$-$La_2O_3$-$Al_2O_3$ durch die Dreiecksfläche mit den Eckpunkten
$E_1 = 5\% \ Ga_2O_3 - 5\% \ La_2O_3 - 90\% \ Al_2O_3$
$E_2 = 90\% \ Ga_2O_3 - 5\% \ La_2O_3 - 5\% \ Al_2O_3$
$E_3 = 5\% \ Ga_2O_3 - 90\% \ La_2O_3 - 5\% \ Al_2O_3$ festgelegt sind, und
die quasiternäre kristalline Verbindung vor der Herstellung der polykristallinen Sinterkörper aus Galliumoxid, Lanthanoxid und Aluminiumoxid hergestellt worden ist.

2. Verfahren zur Herstellung der polykristallinen Sinterkörper gemäß Anspruch 1 durch Sinterung von Pulvergemischen aus Siliciumnitrid, Sinteradditiven auf Oxidbasis und ggf. weiteren refraktären Zusätzen auf Carbid- und/oder Nitridbasis mit oder ohne Anwendung von Druck bei Temperaturen im Bereich von 1700° bis 2100°C,
**dadurch gekennzeichnet,**
daß Pulver aus quasiternären kristallinen Verbindungen aus $Ga_2O_3$-$La_2O_3$-$Al_2O_3$, deren mengenmäßige Anteile in Mol-% im Dreistoffsystem $Ga_2O_3$-$La_2O_3$-$Al_2O_3$ durch die Dreiecksfläche mit den Eckpunkten
$E_1 = 5\% \ Ga_2O_3 - 5\% \ La_2O_3 - 90\% \ Al_2O_3$
$E_2 = 90\% \ Ga_2O_3 - 5\% \ La_2O_3 - 5\% \ Al_2O_3$
$E_3 = 5\% \ G_2O_3 - 90\% \ La_2O_3 - 5\% \ Al_2O_3$ festgelegt sind
als mindestens ein Sinteradditiv verwendet werden, die vor dem Vermischen mit den übrigen Bestandteilen und vor der Sinterung aus Galliumoxid, Lanthanoxid und Aluminiumoxid in den oben definierten Mengen durch Erhitzen auf Temperaturen von 1500° - 1850°C hergestellt worden sind.

3. Verfahren nach Anspruch 2 zur Herstellung der polykristallinen Sinterkörper gemäß Anspruch 1,
**dadurch gekennzeichnet,**
daß als Ausgangsmaterial homogene Pulvergemische mit einer durchschnittlichen Teilchengröße von < 2 μm aus mindestens 70 Gew.-% Siliciumnitrid, von dem mindestens 80 Gew.-% in der α-Modifikation vorliegen, mit einem Anteil von Verunreinigungen in Form von Oxiden und freiem Kohlenstoff von nicht mehr als 4,0 Gew.-% und aus bis zu 30 Gew.-% der quasternären kristallinen Verbindungen im Dreieck $E_1$-$E_2$-$E_3$ des Systems $Ga_2O_3$-$La_2O_3$-$Al_2O_3$ allein oder im Gemisch mit Zusätzen auf Oxid- und/oder Carbid- und/oder Nitridbasis,wobei jedoch insgesamt mindestens 1 Gew.-% der quasiternären kristallinen Verbindungen vorhanden sein muß, verwendet werden.

4. Verfahren nach Anspruch 3,
**dadurch gekennzeichnet,**
daß Gemische aus den quasiternären kristallinen Verbindungen und Zusätzen auf Oxidbasis, ausgewählt aus den Gruppen der kristallinen Silicate natürlicher oder synthetischer Herkunft, der Metalloxide mit Metallatomen aus den Gruppen 2a und 3b des Periodischen Systems einschließlich der Lanthaniden und Aluminium und der Siliciumaluminiumoxinitride verwendet werden.

5. Verfahren nach Anspruch 3,
**dadurch gekennzeichnet,**
daß Gemische aus quasiternären kristallinen Verbindungen und Zusätzen auf Carbidbasis, ausgewählt aus der Gruppe der Metallcarbide mit Metallatomen aus den Gruppen 4b, 5b und 6b des Periodischen Systems, sowie Bor und Silicium und/oder Zusätzen auf Nitridbasis, ausgewählt aus der Gruppe Titannitrid und Titancarbonitrid, verwendet werden.

6. Verwendung der polykristallinen Sinterkörper gemäß Anspruch 1 als keramische Schneidwerkstoffe für die spanabhebende Bearbeitung von Eisenwerkstoffen bei hohen Schnittgeschwindigkeiten.

**Claims**

1. A polycrystalline sintered object having high rupture strength and hardness, consisting of at least 66% by weight of a crystalline silicon nitride phase, at least 90% by weight of which is present in the β-modification, and of up to 34% by weight of secondary intergranular grain boundary phases based on oxide, carbide and/or nitride, at least one of which is crystalline, characterized in that at least 25% by weight of the intergranular secondary grain boundary phases consist of a quasiternary crystalline compound of $Ga_2O_3$-$La_2O_3$-$Al_2O_3$ whose proportions are defined in mol% in the triple substance system $Ga_2O_3$-$La_2O_3$-$Al_2O_3$ by thre triangle area with the points of reference
$E_1 = 5\%$ of $Ga_2O_3 - 5\%$ of $La_2O_3 - 90\%$ of $Al_2O_3$
$E_2 = 90\%$ of $Ga_2O_3 - 5\%$ of $La_2O_3 - 5\%$ of $Al_2O_3$
$E_3 = 5\%$ of $Ga_2O_3 - 90\%$ of $La_2O_3 - 5\%$ of $Al_2O_3$

and the quasiternary crystalline compound has been prepared from gallium oxide, lanthanum oxide and aluminium oxide prior to the production of the polycrystalline sintered object.

2. A process for the production of the polycrystalline sintered object according to Claim 1 by sintering powder mixtures consisting of silicon nitride, oxide-based sinter additives and, if desired, other carbide-based and/or nitride-based refractory additives with or without using pressure at temperatures in the region of 1700° to 2100°C, characterized in that powders consisting of quasiternary crystalline compounds of $Ga_2O_3$-$La_2O_3$-$Al_2O_3$ whose proportions are defined in mol% in the triple substance system $Ga_2O_3$-$La_2O_3$-$Al_2O_3$ by the triangle area with the points of reference

$E_1$ = 5% of $Ga_2O_3$ – 5% of $La_2O_3$ – 90% of $Al_2O_3$
$E_2$ = 90% of $Ga_2O_3$ – 5% of $La_2O_3$ – 5% of $Al_2O_3$
$E_3$ = 5% of $Ga_2O_3$ – 90% of $La_2O_3$ – 5% of $Al_2O_3$

are used as at least one sinter additive which has been prepared from gallium oxide, lanthanum oxide and aluminium oxide in the amounts defined above by heating at temperatures of 1500°–1850°C prior to being mixed with the other components and prior to sintering.

3. A process according to Claim 2 for the production of the polycrystalline sintered object according to Claim 1, characterized in that the initial materials are homogeneous powder mixtures of an average particle size of < 2 μm consisting of at least 70% by weight of silicon nitride, at least 80% by weight of which is present in the α-modification with a proportion of impurities in the form of oxides and free carbon of not more than 4.0% by weight, and of up to 30% by weight of the quasiternary crystalline compounds in the triangle $E_1$-$E_2$-$E_3$ of the system $Ga_2O_3$-$La_2O_3$-$Al_2O_3$ either alone or in admixture with additives based on oxide and/or carbide and/or nitride, it being essential, however, for a total of at least 1% by weight of the quasiternary crystalline compounds to be present.

4. A process according to Claim 3, characterized in that mixtures consisting of the quasiternary crystalline compounds and oxide-based additives, selected from the groups of the crystalline silicates of natural or synthetic origin, of the metal oxides containing metal atoms from the groups 2a and 3b of the periodic system inclusive of the lanthanides and aluminium, and of the silicon aluminium oxynitrides are used.

5. A process according to Claim 3, characterized in that mixtures of the quasiternary crystalline compounds and carbide-based additives, selected from the group of the metal carbides containing metal atoms from the groups 4b, 5b and 6b of the periodic system as well as boron and silicon, and/or nitride-based additives, selected from the group titanium nitride and titanium carbonitride, are used.

6. Use of the polycrystalline sintered objects according to Claim 1 as ceramic cutting materials for the high-speed cutting of ferrous materials.

## Revendications

1. Objets frittés polycristallisés ayant une grande résistance à la rupture et une grande dureté, constitués d'au moins 66% en poids d'une phase de nitrure de silicium cristallisée, dont au moins 90% en poids sont sous la forme de la modification β, et d'au plus 34% en poids de phases de limites de grains intergranulaires secondaires à base d'oxydes, de carbures et/ou de nitrures, dont au moins une est cristallisée, caractérisés en ce qu'au moins 25% en poids des phases de limites de grains intergranulaires secondaires sont constituées d'un composé cristallisé quasi-ternaire de $Ga_2O_3$, $La_2O_3$ et $Al_2O_3$ dont les proportions, en % en moles, sont données dans le système ternaire $Ga_2O_3$–$La_2O_3$–$Al_2O_3$ par la surface du triangle ayant pour sommets:

$E_1$ = 5% $Ga_2O_3$ – 5% $La_2O_3$ – 90% $Al_2O_3$
$E_2$ = 90% $Ga_2O_3$ – 5% $La_2O_3$ – 5% $Al_2O_3$
$E_3$ = 5% $Ga_2O_3$ – 90% $La_2O_3$ – 5% $Al_2O_3$,

et que le composé cristallisé quasi-ternaire a été préparé à partir d'oxyde de gallium, d'oxyde de lanthane, et d'oxyde d'aluminium avant la fabrication des objets frittés polycristallisés.

2. Procédé pour préparer les objets frittés polycristallisés selon la revendication 1, par frittage de mélanges pulvérulents constitués de nitrure de silicium, d'additif de frittage à base d'oxydes, et éventuellement d'autres additifs réfractaires à base de carbures et/ou de nitrures, avec ou sans application de pression, à des températures situées dans l'intervalle allant de 1700 à 2100°C, procédé caractérisé en ce qu'on utilise, en tant qu'au moins un additif de frittage, des poudres de composés cristallisés quasiternaires de $Ga_2O_3$–$La_2O_3$–$Al_2O_3$ dont les proportions, en % en moles, sont données dans le système ternaire $Ga_2O_3$–$La_2O_3$–$Al_2O_3$, par la surface du triangle ayant pour sommets:

$E_1$ = 5% $Ga_2O_3$ – 5% $La_2O_3$ – 90% $Al_2O_3$
$E_2$ = 90% $Ga_2O_3$ – 5% $La_2O_3$ – 5% $Al_2O_3$
$E_3$ = 5% $Ga_2O_3$ – 90% $La_2O_3$ – 5% $Al_2O_3$

qui ont été préparés, avant le mélangeage avec les autres constituants, et avant le frittage, à partir d'oxyde de gallium, d'oxyde de lanthane et d'oxyde d'aluminium, en les quantités indiquées ci-dessus, par chauffage à des températures de 1500 à 1850°C.

3. Procédé selon la revendication 2 pour la fabrication d'objets moulés polycristallisés selon la revendication 1, procédé caractérisé en ce qu'on utilise, comme matières de départ, des mélanges pulvérulents homogènes qui ont une granularité moyenne inférieure à 2 μm, et qui sont constitués d'au moins 70% en poids de nitrure de silicium, dont au moins 80% en poids se trouvent sous la forme de la modification α, avec une proportion d'impuretés, sous la forme d'oxydes et de carbone libre, ne dépassant pas 4,0% en poids, et d'au plus 30% en poids des composés cristallisés quasi-ternaires dans le triangle $E_1$-$E_2$-$E_3$ du système $Ga_2O_3$–$La_2O_3$–$Al_2O_3$, seuls ou en mélanges avec des additifs à base d'oxydes et/ou de carbures et/ou de nitrures, avec la condition toutefois qu'il y ait au total au moins 1% en poids des composés cristallisés quasi-ternaires.

4. Procédé selon la revendication 3, caractérisé en ce qu'on utilise des mélanges des composés cristallisés quasi-ternaires et d'additifs à base d'oxydes pris dans l'ensemble constitué par les silicates cristallisés d'origine naturelle ou synthétique, par les oxydes de métaux appartenant aux groupes 2a et 3b de la classification périodique, y compris les lanthanides et l'aluminium, et par les oxynitrures de silicium-aluminium.

5. Procédé selon la revendication 3, caractérisé en ce qu'on utilise des mélanges des composés cristallisés quasi-ternaires et d'additifs à base de carbures pris dans l'ensemble constitué par les carbures de métaux des groupes 4b, 5b et 6b de la classification périodique ainsi que du bore et du silicium, et/ou d'additifs à base de nitrures pris dans l'ensemble constitué par le nitrure de titane et le carbonitrure de titane.

6. Application des objets frittés polycristallisés selon la revendication 1 comme matériaux de coupe céramiques pour l'usinage de matériaux ferreux par enlèvement de copeaux à de grandes vitesses de coupe.

EP 0 247 528 B1